# EUROPEAN PATENT APPLICATION

(11) **EP 1 508 384 A2**
(43) Date of publication of application: **23.02.2005**
(21) Application number: 04254985.7
(22) Date of filing: 19.08.2004
(51) Int. Cl.: B05D 7/20, H01F 41/12, H01F 27/32, H01F 5/06, H02K 15/12, H01B 13/16

(54) **System and method for applying varnish to an electrical coil**

(30) Priority: 19.08.2003 JP 2003207833
(71) Applicant: Minebea Co., Ltd., Nagano-ken 389-0293 (JP)
(72) Inventor: Takahashi, Masahiro, Tokyo 143-8543 (JP); Osanai, Yoshihito, Kitasaku-Gun, Nagano-Ken 389-0293 (JP); Yagyu, Takahiro, Nagano-Ken 395-0076 (JP)
(74) Representative: Wilson Gunn Gee

(57) **Abstract**

A polyurethane varnish is used to impregnate an electrical coil and cure it. The impregnation and curing treatment method comprises a preliminary heating step in which an article having a coil is heated to a preliminary heating temperature at which the viscosity of the polyurethane varnish decreases and is above the drying temperature, a varnish application step in which the polyurethane varnish is continuously applied to the coil while rotating the heated article at a constant speed, and a high-temperature rotary drying step in which the polyurethane varnish is dried while heating said polyurethane varnish at a drying temperature which is higher than the varnish temperature during the varnish application step.

## Description

### FIELD OF INVENTION

The present invention relates to a system and method for applying varnish to an electrical coil. More particularly, the present invention relates to a system and method for impregnating a coil with a polyurethane varnish followed by a curing treatment.

### BACKGROUND

A stator coil of a resolver is typically wound around the magnetic pole teeth of the resolver stator, coated with a varnish containing an epoxy resin, impregnated with the varnish, and cured by drying to fix the stator coil in the stator. Furthermore, the terminals connected to the stator coil are coated in their entirety with a molten resin and then cured. An epoxy resin is used as a varnish for fixing the stator coil.

Because epoxy resin has a high hardness, the resin is sometimes cracked when it is used in coil manufacturing processes having large temperature differences causing wire rupture. Furthermore, it was required to cure the varnish at high temperature during the manufacture of the coil. Therefore, a temperature tank had to be used, and the temperature control of such a tank entailed significant expense. More specifically, a stator coil made by winding wire through a part of wheel-like insulating gaps on the magnetic pole teeth of a stator was connected in series to each magnetic pole tooth through a crossover line. A liquid or molten resin material was then applied in the form of a resin mold (by potting treatment, for example) to the surface of the peripheral edges and the magnetic pole teeth of the stator, thereby impregnating the stator coil to fix it to the magnetic pole teeth, and also fixing the terminals to the peripheral edge.

Prior methods and systems are described in Japanese Unexamined Patent Publication No. 2003-21539, Japanese Unexamined Patent Publication No. H11-45817, Japanese Unexamined Patent Publication No. H08-283659, and Japanese Unexamined Patent Publication No. 2002-332454.

Formerly, varnishes with such good characteristics as electric insulating properties and adhesive properties were preferred when fixing coils of rotary electric machines and angle detectors, such as resolvers. However, there is a drawback associated with epoxy resins, namely that epoxy resins have a low elasticity after curing due to their high hardness.

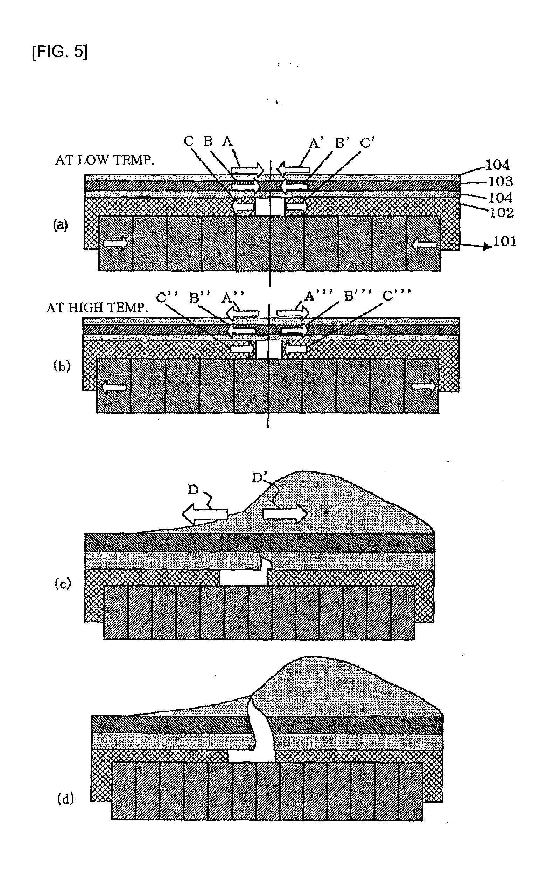

FIG. 5 is a diagram illustrating the mechanism of wire fracture in an electric cable. FIG. 5(a) is a cross-sectional view illustrating the location close to a crossover wire that was impregnated with a varnish at a low temperature. FIG. 5(b) is a cross-sectional view illustrating the location close to a crossover wire that was impregnated with a varnish at a high temperature. FIG. 5(c) is a cross-sectional view illustrating the location close to a crossover wire that was impregnated with a varnish, this figure relating to a state in which cracks begin to appear in the varnish. FIG. 5(d) is a cross-sectional view illustrating the location close to a crossover wire that was impregnated with a varnish at a low temperature; this figure illustrates a state in which the wire has ruptured.

FIGS. 5(a)-(d) are the cross-sectional views illustrating the location close to a crossover wire in the structure obtained by coating an insulator 102 on a stator 101 of a silicon steel sheet constituting magnetic electrodes, winding an electric cable 103 on the insulator 102, impregnating the electric cable 103 with the varnish, and drying the varnish 104, thereby fixing the electric cable 103 to the insulator 102. In the example shown in the figures, in the case illustrated by FIG. 5(a) in which the temperature was decreased, the respective stresses act in the directions shown by arrows in the figures. In the insulator 102 composed of a resin with electrically insulating properties, shrinkage forces (C, C') act from the center toward both sides. In the electric cable 103 composed of a copper wire, shrinkage forces (B, B') act mainly from both sides toward the center. In the cured varnish composed of a resin material, shrinkage forces (A, A') act from both sides to the center. If the temperature is increased from this state, as shown in FIG. 5(b), stresses directed opposite to the arrows shown in FIG. 5(a) act upon all the components. Thus, in the insulator 102, stretching forces (C", C"') act from both sides toward the center. In the electric cable 103, stretching forces (B", B"') act from the center toward both sides. In the cured varnish, stretching forces (A", A"') act from both sides toward the center.

Accordingly, when the coil impregnated with the varnish is used under conditions with severe cooling-heating cycles (changes in temperature difference), stresses (D, D') are created in the varnish and cracks appear therein due to the difference in the thermal expansion coefficient between the structural components made from different materials and the difference in thermal expansion-shrinkage directions.

Under conditions in which vibrations or impacts are regularly applied, a mechanical stress is applied to the electric cable, and an electric cable with a low tensile strength is ruptured as shown in FIG. 5(d). Furthermore, when no varnish is used for fixing a coil, the coil can become loose and the electrically insulating film can be damaged by twisting between the coils in an environment with severe vibrations, impacts, and large cooling-heating cycles. For this reason, it is necessary to select a coil fixing material that allows electric cables with a low tensile strength to be used in an environment with severe vibrations, impacts, and large cooling-heating cycles.

The mechanism leading to the electric cable rupture is summarized as follows:

(1) In an environment with cooling-heating cycles, the varnish is cracked due to the appearance of stresses caused by: (a) the difference in thermal expansion coefficient between the materials; (b) the temperature difference inside the varnish; (c) stress concentration caused by varnish shape; (d) residual stresses at the time of varnish curing; (e) the decrease in varnish strength caused by thermal degradation; and (f) the difference in the direction of thermal expansion and shrinkage.

(2) Cyclic stresses are repeatedly applied to the electric cable locally due to the difference in thermal expansion coefficient between the insulator, stator, varnish, and electric cable after the cracks have appeared.

(3) As a result, the electric cable is ruptured (fatigue fracture).

### SUMMARY

Therefore there is a need for a system and method for impregnating and curing a coil in which the difference in the thermal expansion coefficient between the electrical cable and varnish is small, thereby suppressing rupturing of the coil by the cracking of the varnish. A system and method are described below to address this need.

One aspect of the invention is an impregnation and curing treatment method. The method includes a preliminary heating step, wherein an article having a coil is heated to a preliminary heating temperature at which the viscosity of a polyurethane varnish decreases and is above a drying temperature. The method also includes a varnish application step, wherein the polyurethane varnish is continuously applied to the coil while rotating the heated article at a constant speed. The method further includes a high-temperature rotary drying step in which the polyurethane varnish is dried while heating the polyurethane varnish at a drying temperature that is higher than the varnish temperature during the varnish application step.

Another aspect of the invention is an impregnation and curing treatment system. The system includes a preliminary heating device for heating an article having a coil to a preliminary heating temperature at which the viscosity of a polyurethane varnish decreases and is above a drying temperature. The system also includes a varnish application device for continuously applying said polyurethane varnish to said coil while rotating said heated article at a constant speed. The system further includes a high-temperature rotary drying device for drying said polyurethane varnish while heating said polyurethane varnish at a drying temperature that is higher than the varnish temperature in said varnish application device.

A further aspect of the invention is an impregnation and curing treatment apparatus. The apparatus includes a preliminary heating unit for heating an article having a coil to a preliminary heating temperature which the viscosity of a polyurethane varnish decreases and is above the drying temperature. The apparatus also includes a varnish application unit for continuously applying said polyurethane varnish to said coil while rotating said heated article at a constant speed. The apparatus further includes a high-temperature rotary drying unit for drying said polyurethane varnish while heating said polyurethane varnish at a drying temperature which is higher than the varnish temperature in said varnish application unit.

The foregoing and other features and advantages of preferred embodiments will be more readily apparent from the following detailed description, which proceeds with reference to the accompanying drawings.

### BRIEF DESCRIPTION OF DRAWINGS

FIG. 1 is a drawing illustrating basic steps of the present invention, an impregnation and curing system, and an impregnation and curing treatment apparatus incorporating the basic steps;

FIG. 2 illustrates a method and a jig used for applying a varnish to a narrow coil bobbin in accordance with a preferred embodiment of the present invention;

FIG. 3 is a drawing illustrating the rotation state of the article in accordance with a preferred embodiment of the present invention. FIG. 3(a) illustrates the inertial rotation state when the varnish discharge has ceased. FIG. 3(b) illustrates the rotation state in the rotary drying process;

FIG. 4 illustrates the structure of the varnish application apparatus in accordance with a preferred embodiment of the present invention;

FIG. 5 illustrates the mechanism of wire fracture in an electric cable;

FIG. 6 is a graph illustrating the viscosity - temperature characteristic representing changes in the viscosity of polyurethane varnish with temperature; and

FIG. 7 is a graph representing the viscosity - time characteristic, illustrating how the viscosity of a polyurethane varnish changes with time.

### DETAILED DESCRIPTION

The term "article" as referred to herein stands for a structure obtained by winding an electric cable around a core, such as a coil obtained by winding an electric cable around a bobbin, a rotor or a stator in which an electric cable is wound around a magnetic pole. The coil is an article obtained by multiple winding of an electric cable.

Further, the term "impregnated and cured coil" stands for an coil obtained by impregnating a coil and produced by winding an electric cable so as to obtain the prescribed shape, such as a coil bobbin or a magnetic pole, with a varnish and then curing the varnish.

The above-described mechanism of varnish cracking demonstrates that in order to prevent the origination of cracks, the thermal expansion coefficient of the varnish material has to approach the thermal expansion coefficient of the electric cable. Furthermore, it is also preferred that the thermal expansion coefficient of the insulator approaches the thermal expansion coefficient of the electric cable. A polyurethane varnish is a material that may satisfy those requirements. A preferred embodiment of the present invention uses a polyurethane varnish as the varnish for impregnating the coil and the curing process.

Polyurethane varnishes have been conventionally used as electrically insulating coatings applied to, and baked on, the surface of electric cables. However, such varnishes are presently not used as a filler for impregnating and fixing the coils. Polyurethane varnishes, as shown in Table 1 hereinbelow, have a large elongation providing for high resistance to fracture, a small Young's modulus allowing the varnishes to follow changes in the surrounding components, and a very low glass transition temperature providing for good softness. As a result, such varnishes demonstrate high flexibility. For this reason, even if the article is subjected to expansion and compression, the polyurethane varnish follows changes in the surrounding structure, and the generated stresses can be suppressed within the allowed tensile strength range of the polyurethane varnish.

As a result, in rotary electric machines and angle detectors using articles comprising coils, the articles are allowed to be subjected to thermal expansion and shrinkage in an environment with cooling-heating cycles, and a polyurethane varnish with high elasticity may be used for coil fixing and electric insulation.

**[Table 1]**

| Mechanical properties | Conventional material (epoxy resin) | Polyurethane resin |
|---|---|---|
| Glass transition temperature [°C] | 89 | <-50 |
| Elongation at rupture [%] | | 250 |
| Young's modulus [MPa] | 3200 | 0.17 |
| Tensile strength [MPa] | 84.7 | 0.46 |
| Linear expansion coefficient (<Tg) | 7-8 x 10E-5/°C | --- |
| Linear expansion coefficient (>Tg) | 21-24 x 10E-5/°C | 26 x 10E-5/°C |

Polyurethane resins that are the varnish materials can be generally classified into two types. Resins of the first type are called polymer resins. They are obtained by dissolving a polyurethane in a volatile solvent and are used for applications requiring fast drying, for example, in line coating or printing. The resins of the other type are called reaction resins. They may be impregnated in a hybrid mode, and the cured molded bodies have a very high strength and toughness. Such resins, however, require a long time for curing. The reaction-type polyurethane resins are mainly of a two-liquid type which are prepared by mixing the main component, consisting of a polyol with a high molecular weight and an auxiliary component consisting of a polyisocyanate compound immediately prior to usage, with a single-liquid type (humid gas curing type) component, which consists of an isocyanate-terminated prepolymer. In the case of polyurethane resins, organic solvents such as hydrocarbons with a high boiling point, e.g. cresol, phenol, xylene, and solvent naphtha, may be used as the organic solvent.

The two-liquid polyurethane varnishes typically have a high viscosity after mixing the main component and a curing agent. For this reason, they have been used as casting agents or sealing agents. In order to fill completely the space in the coil with the aforesaid two-liquid polyurethane varnish, the viscosity is decreased after mixing the main component and the curing agent.

From the standpoint of curing characteristics, the polyurethane varnishes have the following specific features devoted (1) and (2):

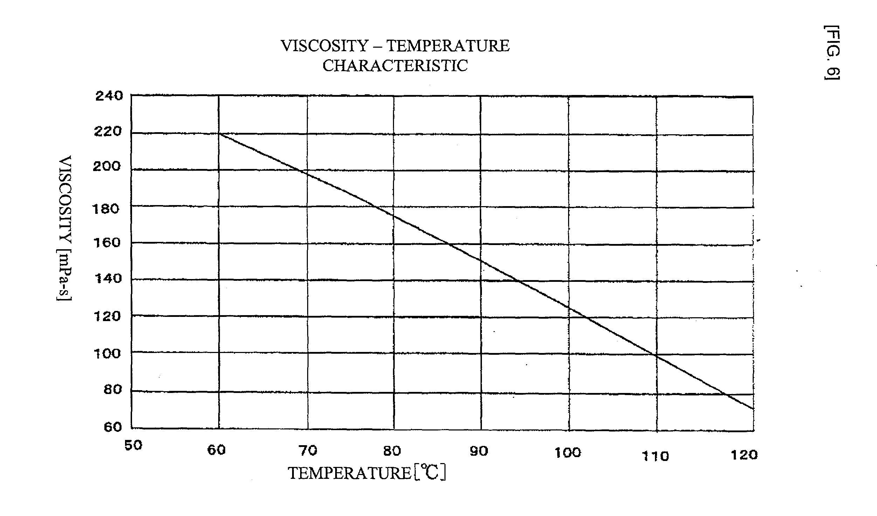

(1) Polyurethane varnishes generally have a temperature - viscosity characteristic such that the viscosity is high at normal temperature and decreases at a high temperature. FIG. 6 is a graph illustrating the viscosity - temperature characteristic representing changes in the viscosity of polyurethane varnishes with temperature. A varnish with the trade name MU-115A/B, manufactured by Nippon Pelnox Corporation is used as a polyurethane varnish. The graph shows the viscosity - temperature characteristic immediately after the two liquids are mixed. The graph is based on the measurement data presented in Table 2 below. The characteristic represented by the graph suggests that when the varnish is cured at a low temperature, the viscosity is high and there is a risk of insufficient local permeation of the varnish into the coil. When the varnish is cured at a high temperature, the permeation into the coil is sufficient, but viscosity decreases and the varnish can sag or be distributed unevenly.

**[Table 2]**

| Viscosity - temperature characteristic | | | | |
|---|---|---|---|---|
| Temperature | 60 | 80 | 100 | 120 |
| Mixture viscosity | 220 | 175 | 125 | 70 |

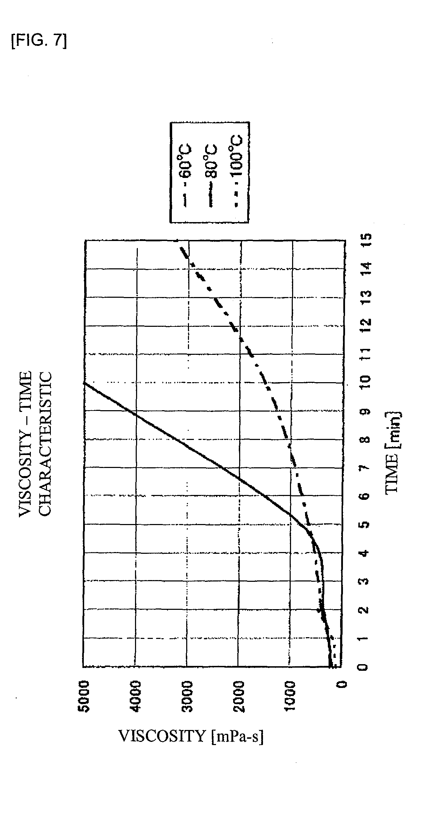

(2) The two-liquid polyurethane varnishes have a high reaction rate, and once several seconds have passed after mixing, the viscosity rapidly increases with time. FIG. 7 is a graph representing the viscosity - time characteristic, which illustrates how the viscosity of a polyurethane varnish changes with time. A varnish with the trade name MU-115A/B, manufactured by Nippon Pelnox Corporation, is used as a polyurethane varnish. The graph shows the viscosity - temperature characteristic where 0 second (min) is set immediately after the two liquids are mixed. The graph is based on the measurement data presented in Table 3 below. From the standpoint of the characteristics represented by these graphs, the initiation of rapid curing of the varnish is practically limited to about 5 min, and it is expected that unless the varnish permeates into the coil immediately after the varnish has been applied. There will be zones in which the varnish is not uniformly permeated into the coil.

**[Table 3]**

| Viscosity - time characteristic | | | | | | |
|---|---|---|---|---|---|---|
| Temperature [°C] | Time (min) | | | | | |
| | 0 | 1 | 2 | 5 | 10 | 15 |
| 60°C | 200 | 250 | 400 | 650 | 1500 | 3250 |
| 80°C | 175 | 250 | 350 | 800 | 5000 | |
| 100°C | 125 | 180 | 475 | | | |

These characteristics suggest that if the varnish does not permeate uniformly into the coil, there are zones in the coil in which no varnish will be present. In an environment with severe vibrations and impacts, at worst portions of the electric cable located in those zones will rub against each other, the insulating layer will be fractured, and a rare short circuit will occur. Therefore, a method to provide for uniform permeation of a polyurethane varnish into the cable is required.

Furthermore, in angle detectors, such as resolvers having transformer coils and rotary machines or stationary machines that have coil bobbins with polyurethane varnishes for fixing the coils, the following two problems are encountered when a resin with a high viscosity, such as a polyurethane varnish, is applied in a very small amount (for example, about 0.03-0.04 g) with a varnish application machine on a narrow coil bobbin. The problems are:

(1) Because a polyurethane varnish has a high viscosity, the varnish is difficult to cut. Even if the discharge operation of the varnish application machine is terminated, a drop of varnish appears at the distal end of the discharge nozzle in the varnish application machine, and there is a spread in the amount of varnish applied to an article when a very small amount of varnish is applied. Thus, because the drop of varnish appearing at the distal end of the discharge nozzle has a high surface tension, the drop grows in size and the quantity of impregnated resin differs significantly depending on whether this drop falls on the coil or not. Therefore, there is a significant difference in the amount of varnish that permeates into the coil.

(2) It is difficult to insert the nozzle accurately into a narrow coil bobbin, and setup is a time-consuming operation. Therefore, it is necessary to provide a method for setting up a varnish application apparatus capable of stabilizing the amount of varnish applied to the article, even when the viscosity of the varnish is high and a very small quantity thereof is applied. A method for setting the nozzle position in a simple manner is also required.

A preferred resolution is as follows. Uniformly permeating the polyurethane varnish into the electric cable may be achieved by the following three steps:

(1) Sufficient heating of the article to be coated with a varnish is conducted prior to varnish application in order to decrease viscosity and to improve the varnish's capacity to permeate into the cable when the varnish is brought into contact with the article during varnish application (preheating with a first heating device).

(2) Rotating the article immediately after varnish application. The rotation of the article is continued until the varnish is gelled in order to prevent the varnish from sagging or being distributed nonuniformly (coating with a varnish application device). The two-liquid polyurethane varnishes have a high viscosity after mixing and move downward under gravity at a low rate. Therefore, the article is rotated at a low speed.

(3) Annealing is conducted in the varnish curing process, that is, the impregnated varnish is reheated in the varnish curing process in order to reduce the viscosity thereof and to cause the varnish to permeate further into the electric cable. For this purpose, a limitation is placed on the time interval from the completion of varnish application to reheating (oven heating with a second heating device).

The four steps (4), (5), (6), and (7) described below may be used for applying very small amounts of a resin having a high viscosity, such as polyurethane varnishes, in a varnish application device when application is conducted on a narrow coil bobbin. Thus, a method is provided for setting up a varnish application device and setting the nozzle position in a simple manner, that is a method suitable for simply setting the position and height of the nozzle. These methods allow the quantity of varnish applied to an article to be stable even when the varnish has a high viscosity and is applied in very small amounts.

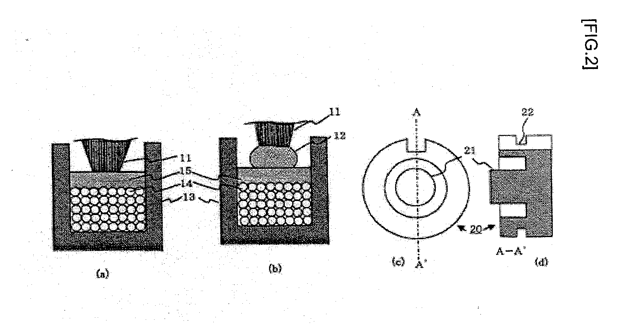

FIG. 2 illustrates a preferred method and a jig for applying a varnish to a narrow coil bobbin. FIG. 2(a) is an drawing illustrating a preferred method for applying a drop remaining on the distal end of the nozzle to the applied layer. FIG. 2(b) is a drawing illustrating another preferred method for applying a drop remaining on the distal end of the nozzle to the applied layer. FIG. 2(c) is a front view of a preferred structure of a jig for aligning the distal end of the nozzle. FIG. 2(d) is a sectional view along AA' shown in FIG. 2(c).

The first step (4) is as follows:

(4) The height of the nozzle at the time the varnish discharge was stopped is set in advance with a jig or, based on the data relating to the settings that have already been made, to a nozzle height such that:

(a) The distal end of the nozzle may be positioned so as to be in contact with the surface of the varnish applied layer 15 that was applied to the coil 14 of the article 13, as shown in FIG. 2(a). The varnish remaining at the distal end of the nozzle may be uniformly applied to the surface of the varnish applied layer 15 on the article 13, while the article 13 is being rotated at a constant speed.

Alternatively, (b) the very last drop 12 at the distal end of the nozzle may be positioned so as to be in contact with the surface of the varnish applied layer 15 that was applied to the coil 14 of the article 13, and the nozzle height is set so that the varnish remaining at the distal end of the nozzle is uniformly applied to the surface of the varnish applied layer 15 on the article 13, while the article 13 is being rotated at a constant speed, as shown in FIG. 2(b).

When the coil 14, obtained by winding around a narrow coil bobbin, is filled with a varnish, the nozzle is positioned as in section (a) above and the varnish is discharged. When the discharge is completed, the distal end of the long thin nozzle is brought into contact with the surface of the varnish applied layer 15 of the article 13, as shown in FIG. 2(a). The varnish remaining at the distal end of the nozzle is applied to the surface of the varnish applied layer 15 from this state by rotating the article 13.

Alternatively, positioning of the nozzle is conducted as described in section (b) hereinabove, and the varnish is discharged. When the discharge is completed, the article 13 is rotated, while the drop 12 of the varnish remaining at the distal end of the long thin nozzle is in contact with the surface of the varnish applied layer 15, thereby applying the varnish drop 12 remaining at the distal end of the nozzle to the surface of the varnish applied layer 15. As a result, the very last drop that appears at the distal end of the nozzle when the varnish discharge is completed is applied uniformly to the surface of the applied layer.

The following problems are encountered, however, when the distal end of the nozzle penetrates into the varnish applied layer:

(a) The insulating layer of the coil may be damaged and a rare short circuit can occur;

(b) Because the polyurethane varnish has a high viscosity, if filling is conducted while the coil bobbin is being rotated, the trace of the distal end of the nozzle can appear, i.e., the surface will become uneven and bumps will appear; or

(c) Furthermore, if the distal end of the nozzle penetrates into the varnish applied layer, the surface of the varnish applied layer will be raised above the predetermined level. As a result, the varnish will be also applied to the side surface of the coil bobbin, which should not be coated, and the surface height of the varnish applied layer will change.

In order to resolve the three above-described problems:

(i) The distal end of the nozzle is set to the height of the surface of the varnish applied layer, thereby bringing the distal end of the nozzle into contact with the varnish coated surface.

(ii) Alternatively, the distal end of the nozzle is set to a height at which a drop remaining at the distal end of the nozzle is brought into contact with the source of the varnish applied layer, thereby bringing the drop into contact with the varnish coated surface.

The above-described problems (a), (b), and (c) may be resolved by setting the height and position of the nozzle as described above in (i) and (ii).

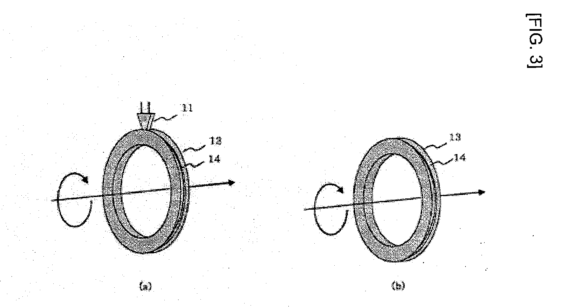

FIG. 3 is a drawing illustrating a preferred rotation state of the part 13. FIG. 3(a) illustrates the inertial rotation state when the varnish discharge has been stopped. FIG. 3(b) illustrates the rotation state in the rotary drying process.

The second step (5) is as follows:

(5) In order to conduct reliably the operations of the first step (4) described above, after the varnish discharge operation in the varnish application device has been stopped, the article 13 shown in FIG. 3(a) rotates by inertia (rotation forward or lengthwise as shown in FIG. 2(a) and FIG. 2(b)) without changing the nozzle position, until the pressure inside the nozzle 11 and the pressure outside the nozzle assume a state of equilibrium. The very last drop of varnish remaining at the distal end of the nozzle is uniformly applied to the varnish applied layer. The term "inertial rotation" as employed herein describes the process of causing the coil bobbin to rotate through multiple turns by inertia, while the application operation in the varnish application device remains terminated.

As a result, the total amount of the applied varnish may become constant. Thus, the varnish may be uniformly applied to the application surface by rotating the coil bobbin while the very last drop remaining at the distal end of the nozzle, after the varnish discharge operation stops, is brought into contact with the coated surface.

The third (6) and fourth (7) steps are as follows:

(6) A resin with high flexibility or high elasticity (soft resin) such as Teflon (trade name), is used as a nozzle material to prevent the electric cable from damage when the distance between the nozzle and the electric cable is decreased.

(7) A standard jig shown in FIG. 2(c) and FIG. 2(d) that can simultaneously set the position and height of the nozzle is used to shorten the time required for setting (programming) the position and height of the nozzle.

The special jig 20 for a narrow bobbin is constructed by using a thin cylindrical tube provided with a shaft 21 in the center and providing a ring-like groove 22 regulating the nozzle position and also regulating the nozzle height. When the nozzle position setting data are determined, this jig 20 is mounted on the varnish application device, the distal end of the nozzle is aligned with the groove 22 and the nozzle position setting data at the time of mounting the article 13 are determined. The jig 20 is then removed, the article 13 is set, and the position of the nozzle is set based on the aforesaid determined data. The nozzle position data are recorded and may also be read out as necessary.

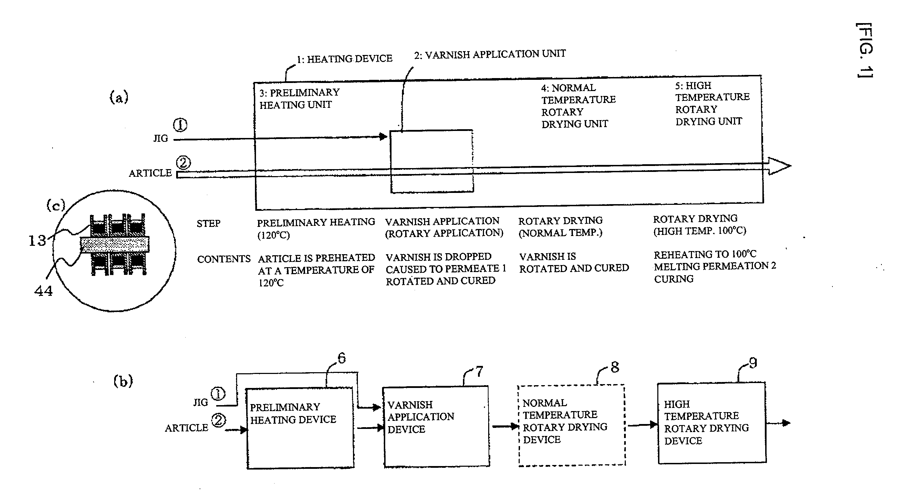

FIG. 1 is a drawing illustrating a preferred embodiment of the impregnation and curing system and apparatus. FIG. 1(a) illustrates the configuration of the impregnation and curing treatment apparatus for the implementation of a preferred method for continuous processing inside a housing. FIG. 1(b) illustrates a preferred configuration of the impregnation and curing treatment system in which steps of the preferred method are implemented by separate devices. FIG. 1(c) illustrates an example of a treated article.

Preferred steps, as shown in FIG. 1(a), include in the order of implementation: (1) a preliminary heating step, (2) a varnish application step, (3) an optional step of rotary drying at normal temperature, and (4) a rotary drying step at a high temperature. These steps will be described below in greater detail.

The impregnation and curing treatment apparatus for the implementation of the aforesaid preferred steps is configured such that a sequence of processes with individual treatment units shown in FIG. 1(a) is performed inside a housing. The preferred impregnation and curing treatment system shown in FIG. 1(b) employs a configuration in which the aforesaid treatment units shown in FIG. 1(a) serve as respective separate devices. The impregnation and curing treatment apparatus shown in FIG. 1(a) comprises a preliminary heating unit 3, a varnish application unit 2, a normal temperature rotary drying unit 4, and a high-temperature rotary drying unit 5 arranged in the order of steps to be implemented inside a housing (covers the entire process apparatus) 1.

The steps implemented in the impregnation and curing treatment apparatus are described below. First, when a narrow coil bobbin is used, positioning of the nozzle in the varnish application unit 2 is carried out with a jig ① or based on the read data in order to conduct adjustment (adjustment step). This adjustment step is necessary for applying the very last drop at the distal end of the nozzle when varnish discharge is ended.

Once the nozzle position has been set, a treatment object or treated article in which any number of articles 13 are passed through an article mounting shaft 44 (an example of the treatment object is shown in FIG. 1(c)) is supplied to the treatment line. This step is a varnish treatment step. The articles may also be supplied to the treatment line one by one, without using the article mounting shaft 44. Article mounting shafts of various shapes may be employed according to the shape of the articles.

The treatment object moves inside the housing 1. First, in the preliminary heating unit 3, the below-described treatment of the preliminary heating step is implemented. In the varnish application unit 2, the below described treatment of the varnish application (rotary application) step is implemented. In the normal temperature rotary drying unit 4, the below described treatment of the normal temperature rotary drying step is implemented. In the high-temperature rotary drying unit 5, the below described treatment of the high-temperature rotary drying step is implemented.

The preferred impregnation and curing treatment system shown in FIG. 1(b) comprises a preliminary heating device 6, a varnish application device 7, a normal temperature rotary drying device 8, and a high-temperature rotary drying device 9, arranged in the order of steps to be implemented.

In a preferred method, similarly to the case illustrated by FIG. 1(a), first, when a narrow coil bobbin has to be used, positioning of the nozzle in the varnish application device 7 is carried out with a jig ① or based on the read data in order to conduct adjustment (adjustment step).

Then, a treatment object in which any number of articles 13 are passed through an article mounting shaft 44 is supplied to the treatment line, this step being a varnish treatment step. The articles may also be supplied to the treatment line one by one, without using the article mounting shaft 44. Article mounting shafts of various shapes can be employed according to the shape of the articles.

The treatment object is subjected to the following treatment. First, in the preliminary heating device 6, the below-described treatment of the preliminary heating step is implemented. In the varnish application unit 7, the below described treatment of the varnish application (rotary application) step is implemented. In the normal temperature rotary drying device 8, the below described treatment of the normal temperature rotary drying step is implemented. In the high-temperature rotary drying device 9, the below described treatment of the high-temperature rotary drying step is implemented. Individual steps will be described hereinbelow by using an example shown in FIG. 1(b).

(1) Preliminary heating step:

In the first heating device shown in FIG. 1(b), the article having an electric cable wound therearound, is heated to a temperature above the drying temperature of the below-described drying step, for example, to a temperature of 120°C. The heating temperature is set so that the viscosity decreases based on the viscosity - temperature characteristic shown in FIG. 6. If the heating temperature is set to 120°C, the viscosity of the varnish can be lower by comparison with that at a temperature of 100°C in the high-temperature rotary drying step and the varnish can fully permeate into the coil at the initial stage. The temperature of 100°C of the high-temperature rotary drying step satisfies the practical requirement of obtaining the appropriate viscosity during re-permeation.

In two-liquid polyurethane varnishes, viscosity rapidly increases with time after mixing. Therefore, the polyurethane varnish has to be permeated into the coil immediately after the application. However, if the article is thus preheated and the varnish is applied to the article in the heated state, the varnish temperature rises, the varnish viscosity drops accordingly, the varnish permeability increases, and the varnish can be caused to permeate fully in into the coil of the article.

(2) Varnish application (rotary application) step: The position and height of the distal end of the nozzle of the application device have been set in advance in the above-described adjustment step. The article is then installed in the application device and the varnish is continuously discharged while the article is rotated at a constant speed. Once the prescribed quantity of the varnish has been discharged, the distal end of the nozzle or a varnish drop at the distal end of the nozzle is brought into contact with the surface of the applied varnish layer. Because the viscosity is high, the very last varnish drop remaining at the distal end of the nozzle is uniformly applied by causing the article to rotate by inertia through multiple turns, as shown in FIG. 3(a), while the distal end of the nozzle or the varnish drop at the distal end of the nozzle remains in contact with the surface of the varnish applied layer. As a result, the varnish may be uniformly applied to the coil of the article. Furthermore, because the very last drop of the varnish can be uniformly applied to the coil of the article, the spread in the amount of applied varnish may be reduced.

(3) Normal temperature rotary drying step: Once varnish application has been completed, the article is immediately rotated at a low constant speed and at a normal temperature, as shown in FIG. 3(b). A time limit is placed on the time interval from immediately after the application to drying. Because the article temperature is high immediately after the application, the varnish viscosity stays low. For this reason, it is necessary to prevent the varnish from sagging or being distributed nonuniformly by rotating the article immediately after the application of the varnish.

In order to reheat the varnish to a high temperature, decreasing the viscosity and causing the varnish to permeate into the coil in the subsequent high-temperature rotary drying step, a time limit is set, including the interval to the subsequent high-temperature rotary drying step. Thus, as follows from the graph representing the viscosity - temperature characteristic shown in FIG. 7, the time prior to the subsequent high-temperature rotary drying step is included in the time interval from the application to the instant at which a rapid curing is started.

The subsequent high-temperature rotary drying step is actually the process implemented in the oven, and it is necessary to stock the treatment objects so that the treatment objects could be accommodated and treated in large quantities. Stocking the treatment objects in the normal temperature rotary drying step effectively accelerates the treatment. Such stocking can be omitted if the subsequent high-temperature rotary drying step is carried out in succession. The varnish viscosity prior to this step lies on the characteristic curve of the viscosity - time characteristic shown in FIG. 7.

(4) High-temperature rotary drying step: After the above-described rotary drying step is implemented at normal temperature, or immediately after the above-described varnish application step, the article is rotated at a high temperature of 100°C as shown in FIG. 3(b) in order to improve the uniformity of application, while again decreasing the varnish viscosity and again causing the varnish to permeate into the coil. The rotation of the article is conducted until the varnish is gelled or for a longer time. The varnish is finally impregnated and dried. The heating temperature is set so that the viscosity decreases, based on the aforesaid viscosity - temperature characteristic.

Because the varnish temperature thus becomes higher than that during application, the viscosity of the varnish again decreases and the varnish can be caused to permeate into the zones where the permeation was insufficient in the previous cycle. In this process, the article is rotated to prevent the viscosity from dropping and the varnish from sagging and being distributed nonuniformly. The viscosity of the varnish in this step does not lie on the characteristic curve of the viscosity - time characteristic shown in FIG. 7, but drops below this curve.

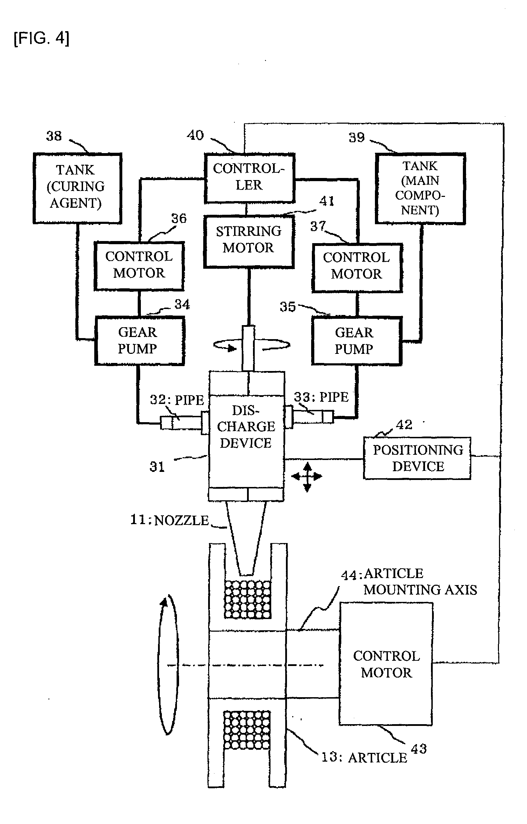

In another preferred embodiment, the structure of the varnish application apparatus is described below. FIG. 4 illustrates the structure of the varnish application apparatus in accordance with the other preferred embodiment.

A charging device 31 comprises pipes 32, 33 for supplying a liquid at both sides, has a nozzle 11 at a distal end thereof, and accommodates a screw (stirring member; not shown in the figures) for stirring the inside thereof. The screw is linked to a stirring motor (stirring member drive means) 41. The stirring motor 41 is connected to a controller 40. Gear pumps 34, 35 for feeding liquids are connected to the two pipes 32, 33, respectively. Respective control motors (pump drive means) 36, 37 are linked to the two gear pumps 34, 35. The two control motors 36, 37 are connected to the controller 40. A main component tank 39 is linked to the gear pump 35, and a curing agent tank 38 is linked to the gear pump 34. The controller 40 comprises a microcomputer (not shown in the figures), comprises the prescribed control software, and executes the prescribed operations with this software.

The discharge device 31 is linked to a positioning device 42 for determining the height and position of the distal end of the nozzle 11. The positioning device 42 comprises a motor (not shown in the figures) as a drive source. Furthermore, a control motor (article mounting shaft drive means) 43 is also provided, this motor comprising an article mounting shaft 44 for mounting the article having the coil 14 wound thereon, for example, on the coil bobbin 13. The aforesaid positioning device 42 is equipped with a motor (not shown in the figures) of the article mounting shaft drive means. The stirring motor 41 serves as the stirring member drive means, the control motor 43 serves as the article mounting shaft drive means, and the control motors 36, 37 serving as the gear pump drive means have a structure such that the controller 40 can conduct the control of the prescribed nozzle positioning, nozzle height determination, rotation of the coil bobbin, and beginning and end of varnish discharge.

The main component tank 39 is filled with the main components of the two-liquid polyurethane varnishes, and the curing agent tank 38 is filled with the curing agent. The main component and curing agent located in the two tanks 38, 39 are supplied under pressure from pipes 32, 33 into the discharge device 31 via the respective gear pumps 34, 35. The two components that have been supplied into the discharge device 31 are stirred by the screw (not shown in the figures) and ejected from the nozzle 11 under the pressure applied by the gear pumps 34, 35.

The varnish application device executes the following operation under the control of the controller 40: The positioning device is controlled so that the nozzle assumes the appropriate height and position with respect to the coil of the article that has been heated in advance to a temperature sufficient to decrease the viscosity of the varnish. Data relating to the position and height of the distal end of the nozzle are picked up in advance with a jig. The gear pumps 34, 35 are then driven by the two control motors 36, 37, and the main component and curing agent located in the two tanks 38, 39 are supplied into the discharge device 31. The screw (not shown in the figures) is rotary driven by the stirring motor 41, mixing the two components, and the mixture is applied to the coil 14 from the nozzle 11 under the pressure applied by the gear pumps 34, 35. Once the applied layer 15 has been formed on the coil 14, the positioning device is controlled so that the distal end of the nozzle 11 or the varnish drop at the distal end of the nozzle 11 is brought into contact with the surface of the applied layer 15. When the discharge control is completed and the stirring motor 41 is stopped, the control motor 43 for the article mounting shaft 44 is caused to rotate by inertia, without changing the position and height of the distal end of the nozzle 11 or the varnish drop at the distal end of the nozzle 11 of the positioning device 42.

Normal temperature rotary drying step: The control motor 43 having the article 13 mounted thereon is rotated at a constant low speed so as to prevent the varnish from sagging and being distributed nonuniformly.

High-temperature rotary drying step: The article 13 is rotated with the controller 40 till the varnish is gelled or for a longer time. The rotation is conducted at a constant low speed so as to prevent the varnish from sagging and being distributed nonuniformly.

Yet another preferred embodiment is a jig which is used for the application on a coil bobbin having the coil wound therearound, in particular a coil bobbin with a narrow groove. The jig 20 shown in FIG. 2(c) and FIG. 2(d) is installed on the article mounting shaft 44, and the controller 40 controls the positioning device 42 so that the distal end of the nozzle 11 of the discharge device 31 is positioned in the ring-shaped groove 22 provided on the outer periphery of the jig 20. The positioning data relating to the positioning device 42 at this time are stored in the controller 40. The jig 20 is thereafter removed from the article mounting shaft 44, the article 13 is mounted instead of the jig, the prior positioning data are read out, the positioning device 42 is controlled, and the position and height of the distal end of nozzle 11 are set with the controller 40.

The shape of the ring-shaped groove 22 is formed to have the width of the coil groove in the coil bobbin that has a small width. The height of the groove 22 is set to a height at which the distal end of the nozzle 11 or a drop at the distal end of the nozzle 11 is brought into contact with the varnish surface at the time of varnish application completion.

As a result of the above preferred embodiments, the following may be achieved:

(1) The impregnated and cured coil is obtained by impregnating and curing a polyurethane varnish in a coil obtained by winding an electric cable to obtain the prescribed shape. Therefore, the difference in the thermal expansion coefficient at least between the cable and the varnish may be decreased, cracking of the varnish may be suppressed, and therefore the cable may be prevented from rupturing.

(2) With the impregnation and curing treatment method, an electric cable may be wound to obtain the prescribed shape and a polyurethane varnish is impregnated and cured in the coil thus wound. Therefore, the polyurethane varnish which, at least, has a decreased difference in thermal expansion coefficient with the electric cable, and in which cracking may be suppressed, may be impregnated and cured as a filler in the cable.

(3) The article that is to be coated with the varnish is heated sufficiently prior to varnish application. Therefore, the viscosity of the varnish that is in contact with the article during application may be decreased. As a result, permeability of the varnish into the cable may be improved.

(4) The varnish may be prevented from sagging and being distributed nonuniformly by rotating the article immediately after varnish application at normal temperature or a high temperature and rotating the article till the varnish is gelled.

(5) In the varnish curing step, the varnish that was once impregnated is reheated to decrease its viscosity. As a result, the varnish may be caused to permeate further into the cable.

(6) Because the preliminary heating temperature is set to 120°C, the viscosity of the polyurethane varnish may be reduced sufficiently and the varnish may sufficiently permeate into the cable. Furthermore, because the drying temperature is set to 100°C, the varnish that has permeated and assumed a slightly solidified shape would not have its viscosity reduced significantly; in such a case the entire varnish might sag and drip down. Therefore, any small space that was left during preliminary heating may be completely filled with the varnish.

(7) When the varnish discharge is stopped, the nozzle is positioned so as to be at a height such that the distal end of the nozzle or a drop at the distal end of the nozzle is brought into contact with the surface of the varnish applied layer that was applied to the coil of the article and the article is rotated at a constant speed. Therefore, the varnish remaining at the distal end of the nozzle may be uniformly applied to the surface of the varnish applied layer on the article.

(8) After the varnish discharge operation of the varnish application mechanism has been stopped, the article is caused to rotate by inertia, without changing the nozzle position until the internal pressure of the nozzle and the external pressure of the nozzle reach a state of equilibrium. Therefore, the varnish remaining at the distal end of the nozzle may be uniformly applied to the varnish applied layer.

(9) The time required for setting the nozzle position and height may be shortened by setting the nozzle position and the nozzle height at the same time by using a standard jig capable of such simultaneous setting.

(10) The preliminary heating step is carried out with the preliminary heating device, the varnish application step is carried out with the varnish application device, the high-temperature rotary drying step is carried out with the high-temperature rotary drying device and, if necessary, the normal temperature drying step is carried out with the normal temperature drying device. Furthermore, those devices are combined into a system. Therefore, all the expected steps may be executed.

(11) The preliminary heating step is carried out with the preliminary heating unit, the varnish application step is carried out with the varnish application unit, the high-temperature rotary drying step is carried out with the high-temperature rotary drying unit and, if necessary, the normal temperature drying step is carried out with the normal temperature drying unit. Furthermore, those units are accommodated inside a housing. Therefore, all the expected steps may be effectively and continuously executed inside the housing.

(12) The varnish application device has a structure described in claim 15. Therefore, the expected nozzle positioning control, varnish discharge control, and article rotation control may be conducted.

Although the invention described herein is with reference to particular embodiments, it should be understood that these embodiments are merely illustrative of the principals and application of the present invention. It should therefore be understood that modifications may be made to the exemplary embodiments described herein, and that other arrangements may be devised without departing from the spirit and scope of the present invention as defined by the following claims.

## Claims

1. An impregnation and curing treatment method comprising:
a preliminary heating step, wherein an article having a coil is heated to a preliminary heating temperature at which the viscosity of a polyurethane varnish decreases and is above a drying temperature;
a varnish application step, wherein said polyurethane varnish is continuously applied to said coil while rotating said heated article at a constant speed; and
a high-temperature rotary drying step in which said polyurethane varnish is dried while heating said polyurethane varnish at a drying temperature that is higher than the varnish temperature during said varnish application step.

2. The impregnation and curing treatment method of claim 1, wherein said polyurethane varnish is continuously applied to said coil during said varnish application step while rotating said heated article at a constant speed, wherein a nozzle is positioned so that the distal end of the nozzle or a drop at the distal end of the nozzle is brought into contact with the varnish applied layer formed by said applied polyurethane varnish, and wherein said polyurethane varnish is discharged and the article is rotated multiple times without changing the nozzle position.

3. The impregnation and curing treatment method of claim 1 or 3, wherein said preliminary heating temperature is set to 120°C and said drying temperature is set to 100°C.

4. The impregnation and curing treatment method of any preceding claim further comprising:
a normal-temperature rotary drying step, wherein the article is rotated at a low constant speed at normal temperature, after said varnish application step and before said high-temperature rotary drying step.

5. An impregnation and curing treatment system comprising:
a preliminary heating device for heating an article having a coil to a preliminary heating temperature at which the viscosity of a polyurethane varnish decreases and is above a drying temperature;
a varnish application device for continuously applying said polyurethane varnish to said coil while rotating said heated article at a constant speed; and
a high-temperature rotary drying device for drying said polyurethane varnish while heating said polyurethane varnish at a drying temperature that is higher than the varnish temperature in said varnish application device.

6. The impregnation and curing treatment system of claim 5, wherein said varnish application device is a device in which said polyurethane varnish is continuously applied to said coil while rotating said heated article at a constant speed, wherein a nozzle is positioned so that the distal end of the nozzle or a drop at the distal end of the nozzle is brought into contact with the varnish applied layer formed by said applied polyurethane varnish, wherein said polyurethane varnish is applied, and wherein the article is rotated multiple times without changing the nozzle position.

7. The impregnation and curing treatment system of claim 5 or 6, wherein said preliminary heating temperature is set to 120°C and said drying temperature is set to 100°C.

8. The impregnation and curing treatment system of any of claims 5-7 further comprising:
a normal-temperature rotary drying device in which the article that has a varnish applied thereto in said varnish application device is rotated at a low constant speed at normal temperature and fed to the high-temperature rotary drying unit.

9. An impregnation and curing treatment apparatus comprising:
a preliminary heating unit for heating an article having a coil to a preliminary heating temperature at which the viscosity of a polyurethane varnish decreases and is above the drying temperature;
a varnish application unit for continuously applying said polyurethane varnish to said coil while rotating said heated article at a constant speed; and
a high-temperature rotary drying unit for drying said polyurethane varnish while heating said polyurethane varnish at a drying temperature which is higher than the varnish temperature in said varnish application unit.

10. The impregnation and curing treatment apparatus of claim 9, wherein said varnish application unit is a unit in which said polyurethane varnish is continuously applied to said coil while rotating said heated article at a constant speed, wherein a nozzle is positioned so that the distal end of the nozzle or a drop at the distal end of the nozzle is brought into contact with the varnish applied layer formed by said applied polyurethane varnish, wherein said polyurethane varnish is discharged, and wherein the article is rotated multiple times without changing the nozzle position.

11. The impregnation and curing treatment apparatus of claim 9 or 10, wherein said preliminary heating temperature is set to 120°C and said drying temperature is set to 100°C.

12. The impregnation and curing treatment apparatus of any of claims 9-11 further comprising:
a normal-temperature rotary drying device in which the article that has a varnish applied thereto in said varnish application unit is rotated at a low constant speed at normal temperature and fed to the high-temperature rotary drying unit.

13. A varnish application apparatus comprising
a discharge device having a nozzle with a flexible distal end and serving for mixing inside thereof a main agent and a curing agent of a two-liquid varnish supplied via respective pumps and discharging through said nozzle;
pump driving means for driving said pumps;
mixing means for carrying out said mixing;
positioning means for positioning said discharge device;
article mounting shaft drive means for driving an article mounting shaft; and
a controller,
wherein the distal end of the nozzle is positioned with the positioning means with respect to the coil of the article mounted on said article mounting shaft under the control performed with the controller,
wherein the varnish is applied to the coil with said pump driving means and stirring means while rotating the article with said article mounting shaft driving means,
wherein the distal end of said nozzle or a drop at the distal end of the nozzle is positioned with said positioning means so as to be brought into contact with the surface of said applied layer,
and wherein the article is rotated multiple times with said article mounting shaft driving means after the application end control.
